# EUROPEAN PATENT APPLICATION

(11) **EP 4 629 008 A1**
(43) Date of publication of application: **08.10.2025**
(21) Application number: 25163922.5
(22) Date of filing: 14.03.2025
(51) Int. Cl.: G05B 19/418, G05B 19/4093

(54) **WORKFLOW ENGINE FOR PREDICTIVE ASSEMBLY**

(30) Priority: 19.03.2024 US 202418609988
(71) Applicant: The Boeing Company, Arlington, VA 22202 (US)
(72) Inventor: RENNISON, Benjamin, 22202 Arlington (IS); MATHEW, Shibin, Arlington, 22202 (US); JEON, Hyundo, Arlington, 22202 (US); PAK, Jhoung Yoo, Arlington, 22202 (US)
(74) Representative: Arnold & Siedsma

(57) **Abstract**

The present disclosure provides a workflow engine for predictive assembly. In some aspects, the workflow engine is executed by one or more processors so that the one or more processors are configured to: receive a predictive assembly request for an assembly prediction to be generated for an assembly of interest; receive measurement data associated with the assembly of interest for which the assembly prediction is desired; autonomously build a workflow specific to the assembly of interest for generating the assembly prediction, wherein building the workflow includes determining i) which service pods of a plurality of service pods to invoke for generating the assembly prediction, and ii) a sequence of execution of the invoked service pods; autonomously generate the assembly prediction by executing the workflow using the invoked service pods and the measurement data; and output the assembly prediction.

## Description

### FIELD

Aspects of the present disclosure relate generally to a workflow engine for predictive assembly.

### BACKGROUND

Various surfaces can be mated when components are coupled together during manufacture of an object. In some cases, one or more gaps are present between the mated surfaces. It may be desirable to substantially fill these gaps using a filler material. The process of filling these gaps using a filler material, such as shims, is typically called "shimming" or "fettling." Conventional shimming methods include mating the surfaces, taking measurements of the gaps between the mated surfaces, and fabricating shims based on the gap measurements. Predictive assembly, as it applies to shimming, is a process of predicting the filler material needed to fill the gaps between mated surfaces. For example, surface geometries of the components are measured, the geometry information is used to determine the dimensions of the gaps that will be present between the mated surfaces, and the filler material or shims are fabricated based on the determined dimensions. Predictive assembly can be applied in other contexts beyond shimming.

Predictive assembly can include many processes that conventionally have been executed on one-off custom scripts for each process. The custom scripts are distinctly split from each other and are not linked together. Consequently, conventional systems have lacked a cohesive workflow or process management process to monitor the predictive assembly process as a whole. Accordingly, conventionally, predictive assembly has had certain challenges.

### SUMMARY

The present disclosure provides a method in one aspect. The method is preferably a computer-implemented method. The method includes receiving, by executing a workflow engine, a predictive assembly request for an assembly prediction to be generated for an assembly of interest; receiving, by executing the workflow engine, measurement data associated with the assembly of interest for which the assembly prediction is desired; autonomously building, by executing the workflow engine, a workflow specific to the assembly of interest for generating the assembly prediction, wherein building the workflow comprises determining i) which service pods of a plurality of service pods to invoke for generating the assembly prediction, and ii) a sequence of execution of the invoked service pods; autonomously generating, by executing the workflow engine, the assembly prediction by executing the workflow using the invoked service pods and the measurement data; and outputting, by executing the workflow engine, the assembly prediction.

In one aspect, in combination with any example method above or below, determining the sequence of execution of the invoked service pods comprises determining, by executing the workflow engine, which of the invoked service pods to execute in series and which to execute in parallel.

In one aspect, in combination with any example method above or below, the measurement data is received as part of the predictive assembly request.

In one aspect, in combination with any example method above or below, autonomously building, by executing the workflow engine, the workflow specific to the assembly of interest for generating the assembly prediction comprises determining a priority of the predictive assembly request relative to one or more other predictive assembly requests received by the workflow engine.

In one aspect, in combination with any example method above or below, the method includes shifting, by executing the workflow engine, one or more computing resources for executing the workflow based at least in part on the priority.

In one aspect, in combination with any example method above or below, shifting the one or more computing resources for executing the workflow based at least in part on the priority comprises spinning up (e.g., starting, enabling, initiating, booting up, et cetera), by executing the workflow engine, additional computing resources to execute the workflow.

In one aspect, in combination with any example method above or below, autonomously building, by executing the workflow engine, the workflow specific to the assembly of interest for generating the assembly prediction comprises determining, by executing the workflow engine, computing resources needed for executing the workflow.

In one aspect, in combination with any example method above or below, determining the computing resources needed for executing the workflow comprises determining, by executing the workflow engine, that there is an insufficient amount of computing resources for executing the workflow, and wherein the method further comprises: spinning up (e.g., starting, enabling, initiating, booting up, et cetera), by executing the workflow engine, additional computing resources so that there is a sufficient amount of computing resources for executing the workflow.

In one aspect, in combination with any example method above or below, the assembly prediction output by the workflow engine includes geometry data for at least one component for the assembly of interest.

In one aspect, in combination with any example method above or below, the method further includes receiving, by a build system, the assembly prediction output by the workflow engine; and building, by the build system, at least one component for the assembly of interest based at least in part on the assembly prediction output by the workflow engine, and wherein the build system does the receiving and the building autonomously in response to receiving the assembly prediction.

In one aspect, in combination with any example method above or below, the assembly prediction includes build data representing instructions for building the at least one component for the assembly of interest.

In one aspect, in combination with any example method above or below, the workflow engine is a web-based platform that, by executing the workflow engine, causes one or more processors to receive multiple predictive assembly requests at a time, autonomously build and execute workflows specific to assemblies of interest specified in respective ones of the multiple predictive assembly requests to generate respective assembly predictions, and to output the respective assembly predictions.

In one aspect, in combination with any example method above or below, the plurality of service pods include a conditioning pod, an alignment pod, and a surfacing pod.

In one aspect, in combination with any example method above or below, the assembly prediction output by the workflow engine includes geometry data for a shim of a joint of an aircraft.

In one aspect, in combination with any example method above or below, the method further includes monitoring, by executing the workflow engine, a status of the invoked service pods during execution of the workflow; and reporting, by executing the workflow engine, the status of the invoked service pods to a user initiating the predictive assembly request.

The present disclosure provides a system in another aspect. The system may be configured to carry out any example method above or below. The system includes one or more processors and one or more (preferably non-transitory) memory devices storing a program embodying a workflow engine, which, when executed by any combination of the one or more processors, causes the one or more processors to perform an operation (or one or more operations), the operation (or one or more operations) comprising: receiving a predictive assembly request for an assembly prediction to be generated for an assembly of interest; receiving measurement data associated with the assembly of interest for which the assembly prediction is desired; autonomously building a workflow specific to the assembly of interest for generating the assembly prediction, and wherein building the workflow comprises determining i) which service pods of a plurality of service pods to invoke for generating the assembly prediction, and ii) a sequence of execution of the invoked service pods; autonomously generating the assembly prediction by executing the workflow using the invoked service pods and the measurement data; and outputting the assembly prediction.

In one aspect, in combination with any example system above or below, autonomously building, by the workflow engine, the workflow specific to the assembly of interest for generating the assembly prediction comprises determining computing resources needed for executing the workflow, and wherein the operation further comprises: spinning up (e.g., starting, enabling, initiating, booting up, et cetera), in response to determining that there is an insufficient amount of computing resources for executing the workflow, additional computing resources so that there is a sufficient amount of computing resources for executing the workflow.

In one aspect, in combination with any example system above or below, determining the sequence of execution of the invoked service pods comprises determining which of the invoked service pods to execute in series and which to execute in parallel.

In one aspect, in combination with any example system above or below, the assembly prediction output by the workflow engine includes geometry data for a shim of a joint of an aircraft.

The present disclosure provides a (preferably non-transitory) computer-readable medium in another aspect. The (non-transitory) computer-readable medium has computer-readable instructions embodying a workflow engine, the workflow engine being executable by one or more processors to: receive a predictive assembly request for an assembly prediction to be generated for an assembly of interest; receive measurement data associated with the assembly of interest for which the assembly prediction is desired; autonomously build a workflow specific to the assembly of interest for generating the assembly prediction, wherein building the workflow comprises determining i) which service pods of a plurality of service pods to invoke for generating the assembly prediction, and ii) a sequence of execution of the invoked service pods; autonomously generate the assembly prediction by executing the workflow using the invoked service pods and the measurement data; and output the assembly prediction.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
FIG. 1 is a system diagram of a workflow engine for predictive assembly according to example aspects of the present disclosure.
FIG. 2 depicts a surfacing pod of the workflow engine of FIG. 1 according to example aspects of the present disclosure.
FIG. 3 is a flow diagram for a method according to example aspects of the present disclosure.
FIG. 4 is a computing system according to example aspects of the present disclosure.

### DETAILED DESCRIPTION

The present disclosure provides a workflow engine for predictive assembly. In some aspects, the workflow engine of the present disclosure can be a web-based, centralized, reliable, and robust predictive assembly suite that can be utilized to autonomously make assembly predictions (e.g., a prediction as to 3D geometry of a shim for a joint of an aircraft). The workflow engine can link processes for multiple model-based engineering concepts, which enables implementation of cohesive workflows and/or process management of the predictive assembly process as a whole.

In some aspects, the workflow engine can be constructed using a Model Based System Engineering (MBSE) concept and Domain Driven Design (DDD) for the processing of measurement data to make assembly predictions. The MBSE approach for the workflow engine can allow for relatively large and complex processes to be broken down into smaller components so that software containerization can be utilized to deliver a scalable workflow engine usable across an enterprise. The architecture of the workflow engine can allow the workflow engine to process multiple predictive assembly requests simultaneously with intelligent use of computing resources. The DDD construction of the workflow engine allows for deeply connecting predictive assembly implementation to an evolving model (e.g., domain model) of the core business concepts of an enterprise.

The workflow engine of the present disclosure can be executed so that assembly predictions can be generated. The workflow engine can be executed by one or more processors, e.g., of a computing system. In executing the workflow engine, the one or more processors can receive a predictive assembly request, or rather, a request for an assembly prediction to be made. Measurement data (e.g., 3D point cloud data) for an assembly of interest for which the assembly prediction is desired can also be received by the one or more processors executing the workflow engine. The measurement data can be received as part of the predictive assembly request or can be received separately, either before the predictive assembly request is received or thereafter. Metadata associated with the measurement data can also be received by the one or more processors executing the workflow engine (with or separately from the predictive assembly request). The metadata provides information relating to the assembly of interest the measurement data represents. The predictive assembly request, the measurement data, and the metadata can be received by a web-based user interface of the workflow engine. Based on the predictive assembly request, the workflow engine can be executed by the one or more processors to autonomously build a workflow specific to the assembly of interest, e.g., so that the assembly prediction can be generated. Building the workflow can include determining which service pods of a plurality of service pods to invoke for determining the assembly prediction, determining a sequence of execution of the invoked service pods, and determining the computing resources needed or desired to execute the workflow. The one or more processors can execute the workflow engine to autonomously generate the assembly prediction by executing the built workflow using the invoked service pods to process the measurement data and metadata associated therewith. The one or more processors can then execute the workflow engine to output the generated assembly prediction, e.g., to a user or to a build system for building at least one component for the assembly of interest (e.g., a shim for a joint of an aircraft).

Accordingly, the workflow engine can build, run, and manage workflows dynamically and autonomously. The workflow engine can track run time, state, and relationships of each of the subflows or sequence of execution of the invoked service pods. The workflow engine can include a state handler that monitors a state of each task and can record the result to a database automatically. Upon failure of an upstream task, the workflow will stop and a record of the failed tasks downstream of the upstream task can be triggered. When a workflow is finished (for both successes and failures), the workflow engine can send a notification to a user or associated system to provide the assembly prediction or inform of the result.

The workflow engine of the present disclosure can provide certain advantages, benefits, and/or technical effects. For instance, in some aspects, the workflow engine of the present disclosure can provide a web-based design that allows easy transition between teams of an enterprise. In addition, the workflow engine of the present disclosure can provide an enterprise standard tool, which can be used for different models or products of an enterprise (the workflow engine is product agnostic). Moreover, the workflow engine of the present disclosure can allow for rapid deployment and rapid data processing (e.g., due to its cloud processing aspects). Also, the workflow engine can advantageously provide high definition surfacing of assemblies of interest, reduction in manufacturing defects, and can reduce the Information Technology (IT) support for an enterprise in relation to predictive assembly.

Further, in some aspects, the workflow engine of the present disclosure can provide additional advantages, benefits, and/or technical effects, including reusability, maintainability, scalability, and/or testability capabilities. The workflow engine can provide reusability in that new workflows can be created using a frontend Web-User interface. The workflow engine can provide maintainability in that, whenever new functionality is required, a user can be easily registered to the workflow engine and can be added as part of one or more workflows. The workflow engine can provide scalability in that the workflow engine can have the capability to run multiple tasks in parallel, and if/when operation is parallelized, an overall workflow can automatically adjusted for downstream tasks to wait for all parallelized upstream tasks. Moreover, the workflow engine can invoke only pods specific to a given workflow and queue the pods accordingly, and the workflow engine can retrieve the configuration and dynamically construct workflows. The workflow engine can provide testability in that the workflow engine can automatically test its framework with a full integration test. The workflow engine of the present disclosure can have other advantages, benefits, and/or technical effects than those mentioned above.

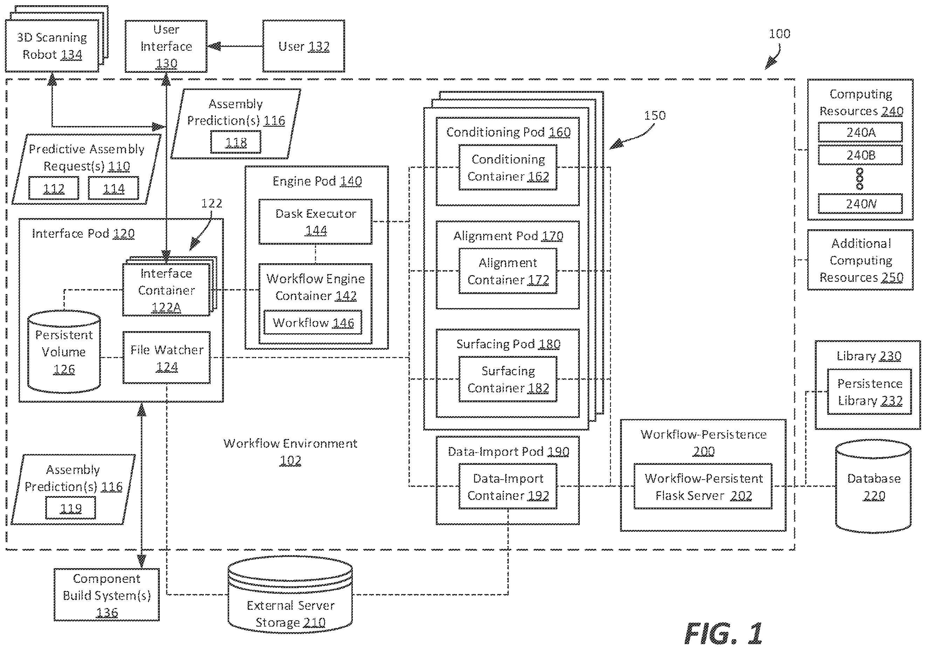

FIG. 1 is a system diagram of a workflow engine 100 for predictive assembly according to example aspects of the present disclosure. The workflow engine 100 can be a web-based platform (or web portal) used for making predictions related to assembly of an article of manufacture, such as an aircraft, watercraft, other vehicles, structures, etc. For instance, the workflow engine 100 can be used to predict dimensions of shims for filling in gaps between surfaces of a joint, e.g., of an aircraft. The workflow engine 100 can be used to make predictions for other assemblies of interest as well, such as for assembly gap management, surface contour profiles, etc. In this regard, the workflow engine 100 can be used to make assembly predictions beyond predictions associated with shims. The workflow engine can be configured receive multiple predictive assembly requests at a time and can process multiple assembly predictions at a time.

As depicted in FIG. 1, the workflow engine 100 includes a workflow environment 102 within which workflows for predictive assembly can be implemented. The workflow engine 100 can include a plurality of pods each containing one or more containers. For the depicted example of FIG. 1, the workflow environment 102 includes an interface pod 120, an engine pod 140, a plurality of service pods 150, and a data-import pod 190. The workflow engine 100 can also include or be associated with various data repositories, data stores, libraries, etc. For instance, for the illustrated example of FIG. 1, the workflow engine 100 includes an external server storage 210, a database 220, and a library 230 having a persistence library 232. The external server storage 210, the database 220, and the library 230 are each communicatively coupled with the workflow environment 102 of the workflow engine 100. A workflow-persistence 200 can facilitate data transmission between the database 220 and the workflow environment 102. Particularly, the workflow-persistence 200 can include a workflow-persistence flask server 202 that is configured to run Hypertext Transfer Protocol (HTTP) requests to call data from the database 220 and/or other networks and/or to send data thereto.

The interface pod 120 can include one or more interface containers 122, such as interface container 122A. The interface container 122A can be a web-based user interface (UI) container, for example. For instance, the interface container 122A, or web-based UI container in this example, can be configured to receive and/or transmit inputs/outputs, or communications generally, from a user interface 130 communicatively coupled thereto. The user interface 130 can be or can include a touchscreen, a computer with a display, mouse, and keyboard, a speaker associated with voice recognition, a combination of the following, etc. A user 132 can provide a user input to the user interface 130, such as a user input indicating a predictive assembly request 110. The predictive assembly request 110 can contain measurement data 112 (e.g., 3D point cloud data representing an assembly of interest, such as a joint of an aircraft) and metadata 114, which can provide information about which assembly of interest the measurement data 112 represents. The user 132 can also be presented with outputs of the workflow engine 100, such as an assembly prediction 116, which can include, for example, 3D geometry data 118 of a shim configured to enhance the mechanical properties of a joint of an aircraft, build data 119 for building a component for the assembly of interest, etc. Accordingly, communications can routed between the user interface 130 and the interface container 122A. The measurement data 112 can be collected by any suitable 3D scanning device. In some aspects, the measurement data 112 and the metadata 114 can be uploaded separately from the predictive assembly request 110.

In some aspects, the interface pod 120 can include a plurality of interface containers 122 (as represented by the multiple interface containers in FIG. 1). Each of the plurality of interface containers 122 can be associated with receiving and/or transmitting inputs/outputs from an interface associated with the workflow engine 100. For instance, in addition to the interface container 122A, which can be a web-based UI interface container as noted above, the plurality of interface containers 122 can also include an interface container associated with receiving and/or transmitting inputs/outputs, or communications generally, from other systems or devices, such as a 3D scanning robot 134. As one example, the 3D scanning robot 134 can scan an assembly of interest (e.g., a joint of an aircraft) and can send the predictive assembly request 110 containing the measurement data 112 and the metadata 114 to its associated interface container. This can be accomplished autonomously without human intervention. In this regard, the 3D scanning robot 134 can capture a 3D scan of an assembly of interest and can make the predictive assembly request 110 to request that the workflow engine 100 derive the assembly prediction 116 without the aid of a human. This may facilitate rapid assembly of an article of manufacture.

The interface pod 120 can also include a file watcher 124 and a persistent volume 126. The file watcher 124 is communicatively coupled with the external server storage 210 and the service pods 150 and, among other things, is configured to facilitate the transfer of data or files from the persistent volume 126 to the external server storage 210. The persistent volume 126 can temporarily store data, such as the measurement data 112, until the data can be transmitted to its destination, such as the external server storage 210. The persistent volume 126 can include one or more non-transitory storage devices.

The engine pod 140 is the driver of the workflow engine 100 and manages and monitors operations of the workflow engine 100. The engine pod 140 includes a workflow engine container 142 and a Dask executor 144. The workflow engine container 142 contains a software package for driving the workflow engine 100 and the Dask executor 144 enables execution of tasks concurrently across multiple machines. That is, the Dask executor 144 executes workflows constructed by the workflow engine container 142.

The engine pod 140 receives the predictive assembly request 110, or a notification of the predictive assembly request 110, and performs its duties to generate the assembly prediction 116. For instance, when the workflow engine container 142 is executed, the workflow engine 100 can autonomously build a workflow 146 specific to the assembly of interest. The workflow engine 100 can build a predefined workflow specific to the assembly of interest or can dynamically build a workflow. The predefined workflow can include a collection of JavaScript Object Notation (JSON) files, or JSON files, for example. In building the workflow 146, the workflow engine container 142 can determine: which service pods of the plurality of service pods 150 to invoke for generating the assembly prediction 116; a sequence of execution of the invoked service pods; and the computing resources needed or desired to execute the workflow. Once the workflow 146 is constructed, the Dask executor 144 executes the workflow 146 so that the assembly prediction 116 can be autonomously determined using the invoked service pods 150 and the measurement data 112 and the metadata associated therewith. The workflow engine 100 can then output the assembly prediction 116, e.g., via the interface pod 120 to the user interface 130 and/or to other systems or devices, such as to one or more component build systems 136 configured to build at least one component for the assembly of interest based on the assembly prediction 116.

The service pods 150 can be arranged in specific categories or can include sets of pods that are specific to certain workflows. Some service pods 150 can be specific to or associated with more than one workflow. For example, the service pods 150 depicted in FIG. 1 are specific to shimming predictive assembly, and when executed, a shimming prediction or even a shim for a given joint can be generated. Specifically, for the example of FIG. 1, the service pods 150 include a conditioning pod 160, an alignment pod 170, and a surfacing pod 180. The service pods 150 can each be coupled with the workflow-persistence 200, which can include a workflow-persistence flask server 202. This allows various learned engineering relationships specific to the assembly of interest to be called from the database 220 and used by the service pods 150 when executed. It will be appreciated that the service pods 150 depicted in FIG. 1 are example service pods relevant to shim predictive assembly but that the service pods 150 can include other types or sets of pods relevant to other assemblies of interest or types of predictive assembly in other example aspects. The service pods 150 can be cloud applications provided over a network, for example.

The conditioning pod 160 includes a conditioning container 162. When the conditioning container 162 is executed, the measurement data 112, which can include 3D point cloud data associated with the assembly of interest, can be cleaned up, classified, and parsed into distinct regions. For instance, when the conditioning container 162 is executed, engineering relationships associated with the assembly of interest can be called from the database 220 to the conditioning pod 160. Using the engineering relationships, a plurality of splines can be created to define subsets of the measurement data 112, with each subset representing a different region of interest of the assembly of interest. For example, a first spline can divide one section of the measurement data 112 from another, thus defining two subsets of the measurement data 112. A second spline can further divide the measurement data 112 into sections, thus defining other subsets, and so on. Nearest neighbor techniques can be utilized. Once the splines are created, the measurement data 112, or one or more subsets thereof that represent distinct regions of interest of the assembly of interest, can be parsed or extracted from the measurement data 112 and transformed into a structured format that can be more readily utilized by other service pods 150. Moreover, the conditioning container 162 can eliminate bad data and can improve the measurement data 112 overall.

In some aspects, when the conditioning container 162 is executed, a virtual milling head can be implemented to look at a shortwave profile deviation of the 3D point cloud to determine whether the surfaces or components of the assembly of interest are in condition for machining, e.g., by using a virtual milling head to virtually machine one or more surfaces to test whether machining them is viable. In some instances, the results of virtual machining can be used to correct the 3D point cloud, e.g., by reducing gaps in final points.

As depicted in FIG. 1, the alignment pod 170 includes an alignment container 172. When the alignment container 172 is executed, one or more techniques can be utilized to fit the measurement data 112, or specific subsets thereof, to engineering requirements. For instance, point-to-point and/or points-to-surface best fit techniques can be utilized to map the points of the measurement data 112 to points or surfaces of one or more of the components of the assembly of interest.

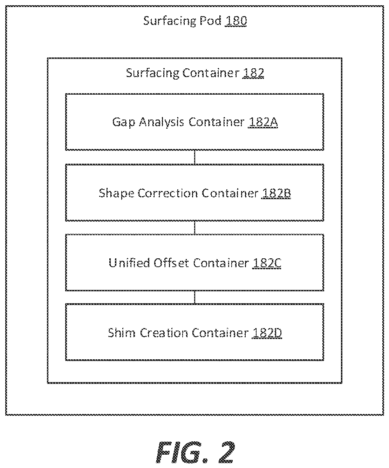

The surfacing pod 180 includes a surfacing container 182. The surfacing container 182 can include a plurality of containers therein. For instance, as shown in FIG. 2, the surfacing container 182 can include a gap analysis container 182A, a shape correction container 182B, a unified offset container 182C, and a shim creation container 182D.

The gap analysis container 182A, when executed, provides for a gap analysis in which the points of the measurement data 112, or one or more subsets thereof, are compared to nominal engineering surfaces of the component(s) of the assembly of interest. This allows for deviations to be determined between the measured component(s) and the nominal engineering design of those component(s). The shape correction container 182B, when executed, performs shape correction based at least in part on the deviations determined by execution of the gap analysis container 182A, as required.

The unified offset container 182C, when executed, allows for determination of an offset. For instance, for part-to-part assemblies, a minimum vector can be determined. When the minimum vector is negative, a machine tool would machine into the machining table. Accordingly, the minimum vector is "pushed out" or shifted so that the minimum vector is positive. A unified offset with all vectors pushed out is determined to correct the data. The shim creation container 182D can utilize the deviations, shape corrections, and unified offset to determine a geometry for a shim designed to fit within the surfaces of a joint to enhance the mechanical properties thereof. Or, more generally, upon execution of the shim creation container 182D, an assembly prediction can be generated.

Although the gap analysis container 182A, the shape correction container 182B, the unified offset container 182C, and the shim creation container 182D are depicted in FIG. 2 as being sub-containers of the surfacing container 182, in other aspects one, some, or all of these sub-containers can be standalone containers or arranged in standalone pods.

The data-import pod 190 includes a data-import container 192. When executed, the data-import container 192 can be used to import nominal engineering data and the measurement data 112. For instance, a user can upload the measurement data 112 to the interface pod 120, and the measurement data 112 can be temporarily stored in the persistent volume 126. The engine pod 140 can call the data-import pod 190 to move the measurement data 112 from the persistent volume 126, e.g., to the external server storage 210.

An example manner in which the workflow engine 100 of FIG. 1 can be used to build, run, and manage workflows dynamically and autonomously to generate assembly predictions will be described below.

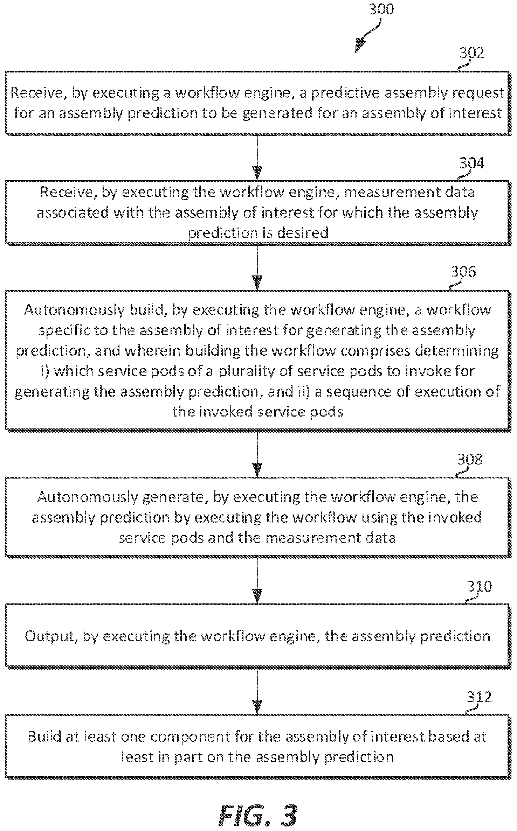

FIG. 3 is a flow diagram for a method 300 of generating an assembly prediction using a workflow engine according to example aspects of the present disclosure. For instance, the method 300 can be implemented by executing the workflow engine 100 of FIG. 1, e.g., with one or more processors or a computing system. For context, the workflow engine 100 of FIG. 1 and its components will be referenced below. Generally, the method 300 can be implemented to generate an assembly prediction for an assembly of interest. For instance, the assembly of interest can be a joint of an aircraft and the assembly prediction can be a shim definition, or a 3D geometry representation of a shim that can be placed at the joint, e.g., to enhance the mechanical properties of the joint. In some aspects, a shim can also be a machined surface (e.g., shim-less machining).

At 302, the method 300 can include receiving, by executing a workflow engine, a predictive assembly request for an assembly prediction to be generated for an assembly of interest. As one example, with reference to FIG. 1, the user 132 can provide a user input to the user interface 130. The user input can initiate the predictive assembly request 110. The interface container 122A, or web-based UI interface, can receive the predictive assembly request 110. As another example, the 3D scanning robot 134 can provide the predictive assembly request 110 to one of the plurality of interface containers 122, e.g., one of the interface containers configured to receive inputs from the 3D scanning robot 134. In some implementations, the 3D scanning robot 134 can automatically initiate the predictive assembly request 110 upon completion of 3D scanning the assembly of interest.

At 304, the method 300 can include receiving, by executing the workflow engine, measurement data associated with the assembly of interest for which the assembly prediction is desired. The measurement data 112 can be received as part of the predictive assembly request 110 or can be received separately from the predictive assembly request 110, either before or after the predictive assembly request 110. In some aspects, some of the measurement data 112 can be received as part of the predictive assembly request 110 while some of the measurement data 112 is received separately therefrom. The measurement data 112 can be accompanied by the metadata 114 that provides information as to what the measurement data 112 represents or describes. The measurement data 112 can be received by one of the plurality of interface containers 122 and can be stored temporarily in the persistent volume 126. The data-import pod 190 can be called by the engine pod 140 to move the measurement data 112 from the persistent volume 126 to, e.g., the external server storage 210. The data-import pod 190 can report to the engine pod 140 whether the data transfer was successful, and the result can be reported back to the user 132 via the interface pod 120 and user interface 130. The relationships in the measurement data 112 can be preserved and tied to 3D engineering and process steps. The preserved relationships can be stored in memory in the database 220 and/or the library 230 and/or other storage media associated with the workflow engine 100.

At 306, the method 300 can include autonomously building, by executing the workflow engine, a workflow specific to the assembly of interest for generating the assembly prediction. Building the workflow at 306 can include determining i) which service pods of a plurality of service pods to invoke for generating the assembly prediction, and ii) a sequence of execution of the invoked service pods. For instance, once the predictive assembly request 110 and measurement data 112 have been received and stored in memory, the engine pod 140 can build the workflow 146. The workflow 146 can be constructed from a predefined workflow associated with the assembly of interest for which the assembly prediction is desired or the workflow 146 can be dynamically constructed, e.g., based on known engineering relationships associated with the assembly of interest.

In building the workflow 146, the engine pod 140 can determine which service pods of the plurality of service pods 150 to invoke. The service pods to invoke depend on the assembly of interest for which the assembly prediction 116 is desired. For instance, a first set of service pods 150 can be invoked to build a workflow specific to a first assembly of interest, a second set of service pods 150, which can be the same or different than the first set, can be invoked to build a workflow specific to a second assembly of interest, and so on. For the example of FIG. 1, the predictive assembly request 110 can indicate that an assembly prediction (e.g., a shim definition) for a joint of an aircraft is desired. Accordingly, as depicted in FIG. 1, the engine pod 140 invokes the condition pod 160, the alignment pod, and the surfacing pod 180.

In addition to determining which service pods of the plurality of service pods 150 to invoke, the engine pod 140 determines a sequence of execution of the invoked service pods 150. For instance, in determining the sequence of execution of the invoked service pods 150, the engine pod 140 can determine which of the invoked service pods 150 to execute in series and which to execute in parallel. In some aspects, when service pods are able to be executed in parallel, the engine pod 140 executes those service pods in parallel. Otherwise, the service pods 150 are executed in series. For the example of FIG. 1, the invoked service pods 150 include the conditioning container 162, the alignment pod 170, and the surfacing pod 180. In one example implementation, the engine pod 140 can determine that the conditioning pod 160 and the alignment pod 170 can be executed in parallel, and once both have been completed, the surfacing pod 180 can be executed. Thus, the determined sequence of execution includes two parallel tasks and then one task performed in series.

Further, in some implementations at 306, autonomously building, by executing the workflow engine, the workflow specific to the assembly of interest for generating the assembly prediction can include determining computing resources needed for executing the workflow. For instance, as depicted in FIG. 1, computing resources 240 can be associated with the workflow engine 100. The computing resources 240 can include various computing resources, including a first computing resource 240A, a second computing resource 240B, and so on to an Nth computing resource 240N, wherein *N* is an integer greater than one (1). The engine pod 140 can determine which of these computing resources 240 are going to be utilized to execute the workflow 146. In some instances, the engine pod 140 can determine that there is or will be an insufficient amount of the computing resources 240 for executing the workflow 146. In such instances, the engine pod 140 can spin up (e.g., starting, enabling, initiating, booting up, et cetera) additional computing resources, such as additional computing resources 250, so that there is a sufficient amount of computing resources for executing the workflow 146.

In some further aspects, in autonomously building the workflow at 306, the engine pod 140 can determine a priority of the predictive assembly request 110 relative to one or more other predictive assembly requests received by the workflow engine 100. For instance, the workflow engine 100 can be configured to receive a plurality of predictive assembly requests at once or be in the process of generating assembly predictions in response to such requests. In some aspects, for example, the workflow engine 100 can be utilized by many users of an enterprise to generate many different assembly predictions for various assemblies of interest at a time. In such instances, the engine pod 140 can shift one or more computing resources 240 for executing the workflow 146 based at least in part on the priority of a given workflow constructed or request made. In some aspects, shifting the one or more computing resources 240 for executing the workflow 146 can include spinning up (e.g., starting, enabling, initiating, booting up, et cetera) new or additional computing resources 250 to execute the workflow 146.

Once the workflow 146 is built, the workflow 146 can be stored in one or more memory devices associated with the workflow engine 100.

At 308, the method 300 can include autonomously generating, by executing the workflow engine, the assembly prediction by executing the workflow using the invoked service pods and the measurement data. For instance, the Dask executor 144 of the engine pod 140 can execute the built workflow 146.

By way of example, to generate a shim definition, the Dask executor 144 can call the conditioning pod 160 to clean up, classify, and parse the measurement data 112, which can include 3D point cloud data associated with the assembly of interest. The measurement data 112 can be called from the external server storage 210 to the conditioning pod 160. When the conditioning container 162 is executed, engineering relationships associated with the assembly of interest can be called from the database 220 and/or the library 230 to the conditioning pod 160. The workflow-persistence 200 can facilitate the calling of the engineering relationships from the database 220 and/or library 230. Using the engineering relationships, a plurality of splines can be created to define subsets of the measurement data 112, with each subset representing a different region of interest of the assembly of interest. Once the splines are created, the measurement data 112, or one or more subsets thereof that represent distinct regions of interest of the assembly of interest, can be parsed or extracted from the measurement data 112 and transformed into a structured format that can be more readily utilized by other service pods 150.

Next, the Dask executor 144 can call the alignment pod 170 in accordance with the sequence of execution. When the alignment container 172 is executed, one or more techniques can be utilized to fit the measurement data 112, or specific subsets thereof determined at the conditioning pod 160, to engineering requirements called from the database 220 and/or library 230. For instance, point-to-point and/or points-to-surface best fit techniques can be utilized to map the points of the measurement data 112, or subsets thereof, to points or surfaces of one or more of the components of the assembly of interest.

Once conditioned and aligned, the Dask executor 144 can call the surfacing pod 180 in accordance with the sequence of execution. With reference to FIGS. 1 and 2, when the surfacing container 182 is executed: the gap analysis container 182A can perform a gap analysis on the measurement data 112, or relevant subset thereof; the shape correction container 182B can perform shape correction, as required; the unified offset container 182C can determine a unified offset; and the shim creation container 182D can determine a shim definition, which is an assembly prediction 116. In this regard, in some aspects, the assembly prediction 116 output by the workflow engine 100 can include geometry data for at least one component for the assembly of interest.

As each invoked surface pod 150 is executed, the engine pod 140 can monitor the status, or result, of each executed service pod 150. For instance, the status of each service pod 150 can be monitored by the engine pod 140, and a status can be reported back to the user 132, e.g., via interface pod 120 communicating with the user interface 130. For example, the status can be or include pass/fail, time of execution, any errors/bugs that arose, expected time of completion, whether human intervention is suggested given a deviation of the measurement data 112 relative to known engineering requirements, a combination of the foregoing, etc. Accordingly, in some aspects, the method 300 can include monitoring, by executing the workflow engine, a status of the invoked service pods 150 during execution of the workflow 146. The method 300 can also include reporting, by executing the workflow engine, the status of the invoked service pods to a user initiating the predictive assembly request.

At 310, the method 300 can include outputting, by executing the workflow engine, the assembly prediction. For instance, the assembly prediction 116 generated by execution of the service pods 150 can be routed to the interface pod 120. Then, the interface pod 120 can output the assembly prediction 116 from the workflow engine 100. As one example, the assembly prediction 116 can be output to the user interface 130. The user interface 130 can then present the assembly prediction 116 to the user 132, e.g., who made the predictive assembly request 110. The user interface 130 can include a display that can present the assembly prediction 116 to the user 132. In other aspects, the assembly prediction 116 can be output as a file or downloadable packet. In some further aspects, in addition or alternatively to outputting to the user interface 130, the assembly prediction 116 can be output to other systems or devices, such as to the one or more component build systems 136 configured to build at least one component (e.g., a shim) for the assembly of interest based on the assembly prediction 116. The one or more component build systems 136 can be or include 3D printing systems (or additive manufacturing systems), machining tools (lathes, drills, mills, grinders, etc.), automated layup machines for constructing laminate composites, etc. In some further aspects, the assembly prediction can identify an area of interest of an assembly of interest that requires shimming; however, the assembly prediction can include a recommendation that the area of interest be reworked rather than shimmed, e.g., due to an extent or degree that the area of interest deviates from its associated specification or acceptable tolerance.

At 312, the method 300 can include building at least one component for the assembly of interest based at least in part on the assembly prediction. For instance, the assembly prediction 116 output by the workflow engine 100 can be used to build at least one component for the assembly of interest, such as a shim for a joint of an aircraft. As one example, the user 132 can receive the assembly prediction 116 that includes 3D geometry data 118 of the component to be made for the assembly of interest. The user 132 can utilize the 3D geometry to construct the component, e.g., using material and one or more machines.

As another example, building the component for the assembly of interest based at least in part on the assembly prediction at 312 can include receiving, by a build system, the assembly prediction output by the workflow engine; building, by the build system, at least one component for the assembly of interest based at least in part on the assembly prediction output by the workflow engine. The build system can receive and build the component autonomously in response to receiving the assembly prediction. The assembly prediction can include build data 119 representing instructions for building the component for the assembly of interest.

To summarize, in some aspects, the workflow engine 100 can be a web-based platform that can be executed to receive multiple predictive assembly requests at a time, autonomously build and execute workflows specific to assemblies of interest specified in respective ones of the multiple predictive assembly requests to generate respective assembly predictions, and to output the respective assembly predictions. In this way, the workflow engine 100 can provide a centralized, reliable, and robust predictive assembly suite that can be utilized to autonomously make assembly predictions. The workflow engine 100 can be used to make all sorts of assembly predictions, including predictions relating to shim geometry, assembly gap management, surface contour profiles, etc. In this regard, the workflow engine 100 can be used to make assembly predictions beyond predictions associated with shims.

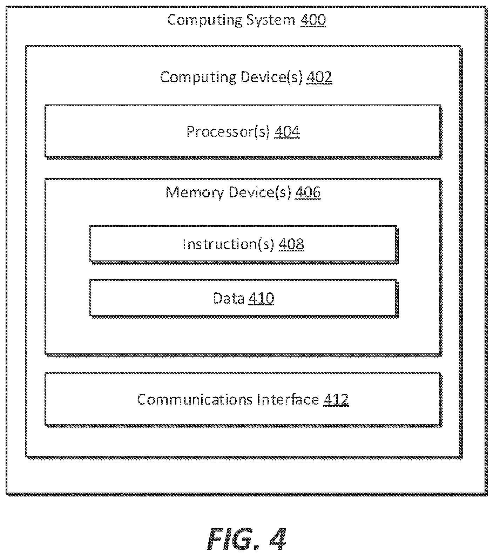

FIG. 4 is a block diagram of an example computing system 400 in accordance with various aspects of the present disclosure. The computing system 400 can be configured to execute the workflow engine 100 of FIG. 1.

As shown in FIG. 4, the computing system 400 can include one or more processor(s) 404 and one or more memory device(s) 406. The one or more processor(s) 404 and the one or more memory device(s) 406 can be embodied in one or more computing devices 402. The one or more processor(s) 404 can include any suitable processing device, such as a microprocessor, microcontroller, integrated circuit, logic device, or other suitable processing device. The one or more memory device(s) 406 can include one or more computer-readable medium, including, but not limited to, non-transitory computer-readable medium, RAM, ROM, hard drives, flash drives, and other memory devices.

The one or more memory device(s) 406 can store information accessible by the one or more processor(s) 404, including computer-readable instructions 408 or computer-readable program code that can be executed by the one or more processor(s) 404. The instructions 408 can be any set of instructions that, when executed by the one or more processor(s) 404, cause the one or more processor(s) 404 to perform operations. The instructions 408 can be software written in any suitable programming language or can be implemented in hardware. The memory device(s) 406 can further store data 410 that can be accessed by the processors 404. For example, the data 410 can include any of the data noted herein. The data 410 can include one or more table(s), function(s), algorithm(s), model(s), equation(s), libraries, etc. according to example aspects of the present disclosure.

The computing system 400, or the computing devices 402 thereof, can include a communication interface 412 used to communicate with the other components. The communication interface 412 can include any suitable components for interfacing with one or more network(s), including for example, transmitters, receivers, ports, controllers, antennas, or other suitable components.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the figures illustrate the architecture, functionality, and operation of possible implementations of systems, methods, and computer program products according to various aspects of the present disclosure. In this regard, each block in the flowchart illustrations or block diagrams may represent a module, segment, or portion of code, which includes one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the scope that is determined by the claims that follow.

## Claims

1. A method (300), comprising:
receiving (302), by executing a workflow engine (100), a predictive assembly request (110) for an assembly prediction (116) to be generated for an assembly of interest;
receiving (304), by executing the workflow engine (100), measurement data (112) associated with the assembly of interest for which the assembly prediction (116) is desired;
autonomously building (306), by executing the workflow engine (100), a workflow (146) specific to the assembly of interest for generating the assembly prediction (116), wherein building the workflow (146) comprises determining i) which service pods (150) of a plurality of service pods (150) to invoke for generating the assembly prediction (116), and ii) a sequence of execution of the invoked service pods (150);
autonomously generating (308), by executing the workflow engine (100), the assembly prediction (116) by executing the workflow (146) using the invoked service pods (150) and the measurement data (112); and
outputting (310), by executing the workflow engine (100), the assembly prediction (116).

2. The method (300) of claim 1, wherein determining the sequence of execution of the invoked service pods (150) comprises determining, by executing the workflow engine (100), which of the invoked service pods (150) to execute in series and which to execute in parallel.

3. The method (300) of claim 1 or 2, wherein the measurement data (112) is received as part of the predictive assembly request (110).

4. The method (300) of any of the preceding claims, wherein autonomously building, by executing the workflow engine (100), the workflow (146) specific to the assembly of interest for generating the assembly prediction (116) comprises determining a priority of the predictive assembly request (110) relative to one or more other predictive assembly requests (110) received by the workflow engine (100), preferably further comprising:
shifting, by executing the workflow engine (100), one or more computing resources (240) for executing the workflow (146) based at least in part on the priority, wherein preferably:
shifting the one or more computing resources (240) for executing the workflow (146) based at least in part on the priority comprises spinning up, by executing the workflow engine (100), additional computing resources (250) to execute the workflow (146).

5. The method (300) of any of the preceding claims, wherein autonomously building, by executing the workflow engine (100), the workflow (146) specific to the assembly of interest for generating the assembly prediction (116) comprises determining, by executing the workflow engine (100), computing resources (240) needed for executing the workflow (146).

6. The method (300) of claim 5, wherein determining the computing resources (240) needed for executing the workflow (146) comprises determining, by executing the workflow engine (100), that there is an insufficient amount of computing resources (240) for executing the workflow (146), and wherein the method (300) further comprises:
spinning up, by executing the workflow engine (100), additional computing resources (250) so that there is a sufficient amount of computing resources (240) for executing the workflow (146).

7. The method (300) of any of the preceding claims, wherein the assembly prediction (116) output by the workflow engine (100) includes geometry data (118) for at least one component for the assembly of interest.

8. The method (300) of any of the preceding claims, further comprising:
receiving, by a build system (136), the assembly prediction (116) output by the workflow engine (100); and
building (312), by the build system (136), at least one component for the assembly of interest based at least in part on the assembly prediction (116) output by the workflow engine (100), and
wherein the build system (136) does the receiving and the building autonomously in response to receiving the assembly prediction (116), preferably wherein:
the assembly prediction (116) includes build data (119) representing instructions for building the at least one component for the assembly of interest.

9. The method (300) of any of the preceding claims, wherein the workflow engine (100) is a web-based platform that, by executing the workflow engine (100), causes one or more processors (404) to receive multiple predictive assembly requests (110) at a time, autonomously build and execute workflows (146) specific to assemblies of interest specified in respective ones of the multiple predictive assembly requests (110) to generate respective assembly predictions (116), and to output the respective assembly predictions (116).

10. The method (300) of any of the preceding claims, wherein:
the plurality of service pods (150) include a conditioning pod (160), an alignment pod (170), and a surfacing pod (180); and/or
the assembly prediction (116) output by the workflow engine (100) includes geometry data (118) for a shim of a joint of an aircraft.

11. The method (300) of any of the preceding claims, further comprising:
monitoring, by executing the workflow engine (100), a status of the invoked service pods (150) during execution of the workflow (146); and
reporting, by executing the workflow engine (100), the status of the invoked service pods (150) to a user initiating the predictive assembly request (110).

12. A system (400), comprising:
one or more processors (404); and
one or more non-transitory memory devices (406) storing a program (408) embodying a workflow engine (100), which, when executed by any combination of the one or more processors (404), causes the one or more processors (404) to perform an operation, the operation comprising:
receiving a predictive assembly request (110) for an assembly prediction (116) to be generated for an assembly of interest;
receiving measurement data (112) associated with the assembly of interest for which the assembly prediction (116) is desired;
autonomously building a workflow (146) specific to the assembly of interest for generating the assembly prediction (116), and wherein building the workflow (146) comprises determining i) which service pods (150) of a plurality of service pods (150) to invoke for generating the assembly prediction (116), and ii) a sequence of execution of the invoked service pods (150);
autonomously generating the assembly prediction (116) by executing the workflow (146) using the invoked service pods (150) and the measurement data (112); and
outputting the assembly prediction (116).

13. The system (400) of claim 12, wherein autonomously building, by the workflow engine (100), the workflow (146) specific to the assembly of interest for generating the assembly prediction (116) comprises determining computing resources (240) needed for executing the workflow (146), and wherein the operation further comprises:
spinning up, in response to determining that there is an insufficient amount of computing resources (240) for executing the workflow (146), additional computing resources (250) so that there is a sufficient amount of computing resources (240) for executing the workflow (146).

14. The system (400) of claim 12 or 13, wherein:
determining the sequence of execution of the invoked service pods (150) comprises determining which of the invoked service pods (150) to execute in series and which to execute in parallel; and/or
the assembly prediction (116) output by the workflow engine (100) includes geometry data (118) for a shim of a joint of an aircraft.

15. A non-transitory computer-readable medium (406) having computer-readable instructions (408) embodying a workflow engine (100), the workflow engine (100) being executable by one or more processors (404) to:
receive a predictive assembly request (110) for an assembly prediction (116) to be generated for an assembly of interest;
receive measurement data (112) associated with the assembly of interest for which the assembly prediction (116) is desired;
autonomously build a workflow (146) specific to the assembly of interest for generating the assembly prediction (116), wherein building the workflow (146) comprises determining i) which service pods (150) of a plurality of service pods (150) to invoke for generating the assembly prediction (116), and ii) a sequence of execution of the invoked service pods (150);
autonomously generate the assembly prediction (116) by executing the workflow (146) using the invoked service pods (150) and the measurement data (112); and
output the assembly prediction (116).
